# EUROPEAN PATENT APPLICATION

(11) **EP 1 696 401 A2**
(43) Date of publication of application: **30.08.2006**
(21) Application number: 06110300.8
(22) Date of filing: 22.02.2006
(51) Int. Cl.: G08C 17/00

(54) **Vehicle remote-operation apparatus**

(30) Priority: 24.02.2005 JP 2005048358
(71) Applicant: Matsushita Electric Industrial Co., Ltd., Osaka Kadoma 571-8501 (JP)
(72) Inventor: Sato, Shinichiro, Kobe-shi, Hyogo (JP)
(74) Representative: TBK-Patent

(57) **Abstract**

A vehicle remote-operation apparatus is provided which is capable of heightening the speed of a response. In this apparatus, with a plurality of portable units (31 to 3m) for a vehicle located within their communicable range with a vehicle-side transmitter (22) and a vehicle-side receiver (23), when one of the plurality of portable units (31 to 3m) is specified as a communication target and a transmission request signal is transmitted from the vehicle-side transmitter (22), a portable unit is specified in order of the greatness of a counter value corresponding to each portable unit.

## Description

### Background of the Invention

### Field of the Invention;

The present invention relates to a vehicle remote-operation apparatus which is capable of, when a portable unit carried by a vehicle user and having a transmission-and-reception function receives a transmission request signal transmitted by a vehicle-side transmitter and transmits a reply signal to a vehicle-side receiver, varying the state of an in-vehicle unit according to the contents of the reply signal.

### Description of the Background Art:

First, the operational principle of a vehicle remote-operation apparatus will be described, using an in-vehicle unit in which if an input is given to an unlocking switch, the unit's state is switched from locked to unlocked. As such an in-vehicle unit, there is a door-lock controller, a steering-lock controller, or an engine-start controller.

Let's assume that one portable unit for a vehicle is located within the range where it can communicate with a vehicle-side transmitter and a vehicle-side receiver. If an input is given to an unlocking switch, a transmission request signal is transmitted from the vehicle-side transmitter. Then, the portable unit receives this transmission request signal and transmits a reply signal. Sequentially, the vehicle-side receiver receives the reply signal transmitted by the portable unit. If the contents of this reply signal are read, an in-vehicle unit is switched from the state where it is locked to the state where it is unlocked.

In contrast, let's assume that several portable units with the same specification are located within the communicable range with the vehicle-side transmitter and the vehicle-side receiver. If a transmission request signal is transmitted from the vehicle-side transmitter without specifying those portable units, a reply signal is simultaneously transmitted from each portable unit. Thus, the vehicle-side receiver receives the reply signals which overlap each other from the several portable units. This makes it impossible to read the contents of the reply signals.

Therefore, in a conventional vehicle remote-operation apparatus, a communication procedure is prepared, called an anti-collision mode. This allows the vehicle-side receiver to read the contents of the reply signals, though there are the several portable units within the communicable range with the vehicle-side transmitter and the vehicle-side receiver. In the anti-collision mode communication, first, a transmission request signal for specifying one of the several portable units for this vehicle is transmitted from the vehicle-side transmitter. Thereby, only the single portable unit receives this transmission request signal and transmits a reply signal. This makes it possible for the vehicle-side receiver to read the contents of the reply signal.

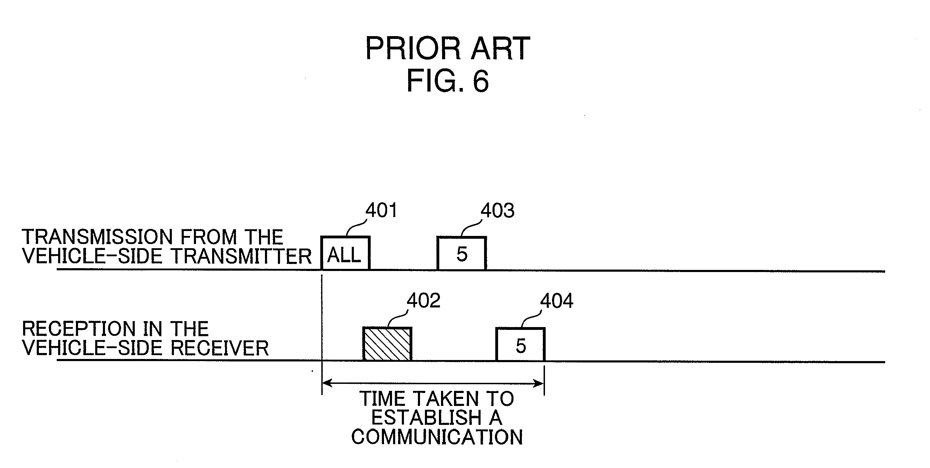

Fig. 6 is a timing chart, showing how the vehicle-side transmitter transmits a transmission request signal and how the vehicle-side receiver receives a reply signal from the portable unit according to the prior art, in the case where the plurality of portable units are located within the communicable range with the vehicle-side transmitter and the vehicle-side receiver. Using this, a description will be given about the anti-collision mode communication and the method of specifying one of the plurality of portable units for the same vehicle.

Herein, five portable units No.1 to No.5 are registered in the targeted vehicle. The preceding communication is assumed to have been established using the portable unit No.5. Besides, the assumption is given that at present as well, the plurality of portable units including the portable unit No.5 are still located within the communicable range with the vehicle-side transmitter and the vehicle-side receiver.

If an input is given to an unlocking switch, a transmission request signal 401 is transmitted from the vehicle-side transmitter. At this point of time, it is unknown how many portable units are within the communicable range with the vehicle-side transmitter and the vehicle-side receiver. Hence, this transmission request signal 401 is a transmission request signal for all the portable units.

Within the communicable range with the vehicle-side transmitter and the vehicle-side receiver, there are the plurality of portable units. Hence, the plurality of portable units transmit a reply signal simultaneously. These reply signals overlap each other to form a reply signal 402. Then, the vehicle-side receiver receives the reply signal 402. This makes it impossible to read the contents of the reply signals from the portable units. At this time, the decision is made that the plurality of portable units are located within the communicable range with the vehicle-side transmitter and the vehicle-side receiver. Thus, the operation mode shifts to the anti-collision mode.

Then, the portable unit which established the last communication is likely to be included, and thus , a transmission request signal 403 which specified the portable unit No.5 is transmitted from the vehicle-side transmitter.

The portable unit No.5 is within the communicable range with the vehicle-side transmitter and the vehicle-side receiver. Hence, the portable unit No.5 receives the transmission request signal 403 and transmits a reply signal 404. Then, the vehicle-side receiver receives the reply signal 404, so that it can read its contents. Consequently, the communication is established, and at this point, the vehicle-side transmitter and the vehicle-side receiver finish communicating with the portable unit. Thereby, the in-vehicle unit's state is switched from locked to unlocked.

Incidentally, in Fig. 6, let's assume that only one portable unit lies there among the portable units for this vehicle. In this case, only this single portable unit transmits a reply signal to the transmission request signal 401 for all the portable units. Thus, the vehicle-side receiver receives this reply signal and reads its contents, so that the communication is established. At this point, the vehicle-side transmitter and the vehicle-side receiver finish communicating with the portable unit. Thereby, the in-vehicle unit is switched from the state where it is locked to the state where it is unlocked.

On the other hand, unless the portable unit No.5 is located within the communicable range with the vehicle-side transmitter and the vehicle-side receiver, the transmission request signal 403 is not received. Hence, the reply signal 404 is not transmitted from the portable unit, either. Thus, the vehicle-side receiver does not receive the reply signal 404.

In this case, all the plurality of portable units for this vehicle are specified one by one, and then, a decision is made whether the transmission request signal has been transmitted. If the identification for all has not yet been completed, a transmission request signal is transmitted for specifying any one of the plurality of portable units which are not specified.

At this time, the portable unit receives the transmission request signal, and the vehicle-side receiver receives a reply signal transmitted by this portable unit. Then, if the contents of this reply signal are read, the communication is established. At this point, the vehicle-side transmitter and the vehicle-side receiver finish communicating with the portable unit. Thereby, the in-vehicle unit's state is switched from locked to unlocked.

In addition, all the plurality of portable units for this vehicle are specified one by one, and then, a decision is made whether the transmission request signal has been transmitted. If the identification for all is completed, the decision is made that the communication has not been established. Then, this processing is terminated.

As described above, the plurality of portable units are located within the communicable range with the vehicle-side transmitter and the vehicle-side receiver, and a transmission request signal is transmitted. In this case, the portable unit which succeeded the last time in communicating with the vehicle-side transmitter and the vehicle-side receiver is probably one of the plurality of portable units. Thus, the portable unit which succeeded in the preceding communication is specified, and the transmission request signal is transmitted. This helps establish and complete a communication promptly, and thereby, heighten its response speed.

Incidentally, for example, Japanese Patent Laid-Open No. 2003-20837 specification and Japanese Patent Laid-Open No. 2003-27792 specification are known as prior-art documents related to the present invention.

However, according to the above described configuration, if the decision is made that the plurality of portable units are located with in the communicable range with the vehicle-side transmitter and the vehicle-side receiver, then first, a transmission request signal is transmitted for specifying the portable unit which succeeded in the preceding communication. Therefore, if the plurality of portable units for the same vehicle frequently come within, or go out of, the communicable range with the vehicle-side transmitter and the vehicle-side receiver, then the portable unit which succeeded in the preceding communication is not necessarily located there. This presents a disadvantage in that a response cannot be made at a higher speed.

### Summary of the Invention

It is an object of the present invention to provide a vehicle remote-operation apparatus which is capable of heightening the speed of a response, even if a plurality of portable units are provided.

A vehicle remote-operation apparatus according to an aspect of the present invention, comprising: a vehicle-side communication unit; and a plurality of radio portable units which are allocated an identification code unique to a vehicle, wherein the vehicle-side communication unit includes: a vehicle-side transmitter which transmits a transmission request signal to each of the plurality of portable units; a vehicle-side receiver which receives a reply signal from each of the plurality of portable units; a plurality of counters which are provided for each of the plurality of portable units, and count a value on a communication state between the vehicle-side transmitter and the vehicle-side receiver and each of the plurality of portable units; and a controller which, with the plurality of portable units located within a communicable range with the vehicle-side transmitter and the vehicle-side receiver, when specifying one portable unit of the plurality of portable units as a communication target and transmitting a transmission request signal from the vehicle-side transmitter, specifies a portable unit in order of the greatness of the values of the plurality of counters, and controls the vehicle-side transmitter so that it transmits a transmission request signal for this portable unit.

This vehicle remote-operation apparatus is capable of establishing a communication in a short time, and thus, heightening its response speed.

These and other objects, features and advantages of the present invention will become more apparent upon reading of the following detailed description along with the accompanied drawings.

### Brief Description of the Drawings

Fig. 1 is block diagram, showing the configuration of a vehicle remote-operation apparatus according to a first embodiment of the present invention.
Fig. 2 is a diagram, showing a communication sequence in the vehicle remote-operation apparatus shown in Fig. 1 which indicates the processing for transmitting a transmission request signal from a vehicle-side transmitter and the processing for receiving a reply signal from a radio portable unit in a vehicle-side receiver.
Fig. 3 is block diagram, showing the configuration of a vehicle remote-operation apparatus according to a second embodiment of the present invention.
Fig. 4 is a diagram, showing a communication sequence in the vehicle remote-operation apparatus shown in Fig. 3 which indicates the processing for transmitting a transmission request signal from a vehicle-side transmitter and the processing for receiving a reply signal from a portable unit in a vehicle-side receiver.
Fig. 5 is a diagram, showing a communication sequence after a counter is reset which indicates the processing for transmitting a transmission request signal from the vehicle-side transmitter and the processing for receiving a reply signal from a portable unit in the vehicle-side receiver.
Fig. 6 is a diagram, showing a communication sequence according to a prior art which indicates the processing for transmitting a transmission request signal from a vehicle-side transmitter and the processing for receiving a reply signal from a portable unit in a vehicle-side receiver.

### Description of the Preferred Embodiments

### (First Embodiment)

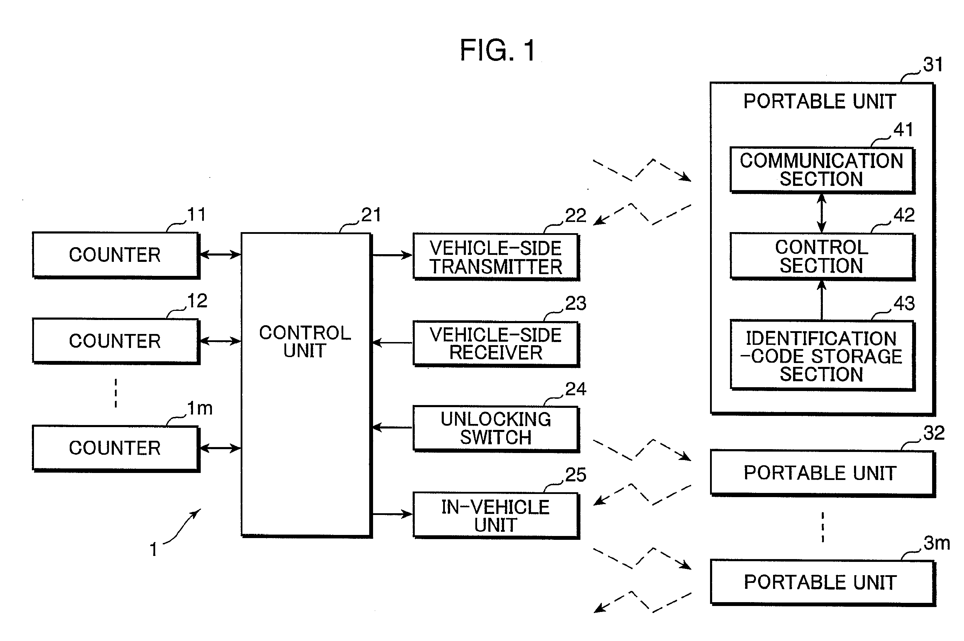

Hereinafter, a vehicle remote-operation apparatus according to a first embodiment of the present invention will be described with reference to the attached drawings. Fig. 1 is block diagram, showing the configuration of the vehicle remote-operation apparatus according to the first embodiment of the present invention.

The vehicle remote-operation apparatus shown in Fig. 1 includes a vehicle-side communication unit 1 provided in a vehicle, and m (which is an integer of two or above) portable units 31 to 3m which are allocated an identification code unique to the vehicle and can communicate by radio with the vehicle-side communication unit 1.

The portable unit 31 includes a communication section 41, a control section 42, and an identification-code storage section 43. Using the communication section 41, the control section 42 receives a transmission request signal from the vehicle-side communication unit 1. Receiving the transmission request signal, the control section 42 reads an identification code stored in advance in the identification-code storage section 43 and an identification number (e.g., No.1) for specifying itself. Then, using the communication section 41, the control section 42 transmits a reply signal including these identification code and identification number. The other portable units 32 to 3m are also configured and operated in the same way as the portable unit 31, except that they have a different identification number (e.g., No.2 to No.m) from each other.

The vehicle-side communication unit 1 includes: m counters 11 to 1m; a control unit 21; a vehicle-side transmitter 22; a vehicle-side receiver 23; an unlocking switch 24; and an in-vehicle unit 25.

The counters 11 to 1m correspond to the portable units 31 to 3m, and count the number of times at which communication is established between the vehicle-side transmitter 22 and the vehicle-side receiver 23, and the portable units corresponding to themselves. The control unit 21 controls each operation of the counters 11 to 1m, the vehicle-side transmitter 22, the vehicle-side receiver 23, the unlocking switch 24, the in-vehicle unit 25, and the like.

The vehicle-side transmitter 22 transmits a transmission request signal for all the plurality of portable units 31 to 3m, or a transmission request signal for the single portable unit specified by an identification number. The vehicle-side receiver 23 receives a reply signal which is transmitted from each portable unit 31 to 3m. Then, it outputs them to the control unit 21. Incidentally, the number of the vehicle-side transmitter 22 or the vehicle-side receiver 23 is not limited especially to one, respectively. Several such units may also be provided in the vehicle's different positions. In that case, one or more units are simultaneously used, respectively.

The unlocking switch 24 detects a user's intention to switch from locked to unlocked, if the user touches it when getting in the vehicle. Then, it notifies the control unit 21 of this detection result. According to the control unit 21's instruction, the in-vehicle unit 25 switches itself from the state where it is locked to the state where it is unlocked, and vice versa.

As the in-vehicle unit 25, there is: a door-lock controller which automatically switches the state of a left or right door, or the like, provided in the vehicle, from locked to unlocked, and vice versa; a steering-lock controller which switches the steering wheel from the state where it is locked to the state where it is unlocked, and vice versa, so that the steering wheel cannot or can be handled; an engine-start controller which switches from the permission to start the engine to the prohibition against it, and vice versa, when an engine-start button is operated; or the like. As the unlocking switch 24, there is mentioned each type of switch which detects a user's intention to switch to the state where each controller described above is locked or unlocked, or the like.

If the unlocking switch 24 is turned on, the control unit 21 controls the vehicle-side transmitter 22 so that it transmits a transmission request signal for all the plurality of portable units 31 to 3m. Hence, the vehicle-side transmitter 22 transmits the transmission request signal for all the plurality of portable units 31 to 3m.

To this transmission request signal, the plurality of portable units 31 to 3m each transmit a reply signal. Then, the vehicle-side receiver 23 receives the reply signal which has been transmitted from each portable unit 31 to 3m. Then, it outputs them to the control unit 21. In this case, the control unit 21 cannot read the contents of the reply signals. Thus, it refers to the values of the counters 11 to 1m and specifies the portable units corresponding to the counters 11 to 1m in order of the greatness of their values. Then, it controls the vehicle-side transmitter 22, so that it transmits the transmission request signal for each portable unit which it has specified, one after another. Hence, the vehicle-side transmitter 22 transmits the transmission request signal for each portable unit, one by one.

At this time, the vehicle-side receiver 23 receives a reply signal from one portable unit. If the control unit 21 reads the contents of the reply signal, it finishes transmitting the transmission request signal. Simultaneously, it increases the value of the counter corresponding to the portable unit which has established the communication. Thereafter, the control unit 21 switches the in-vehicle unit 25 from the state where it is locked to the state where it is unlocked.

Incidentally, the control unit 21 may also clock a specific period and clear a counter whose count value is not incremented after the specific period passes. In addition, the control unit 21 may also sum up the value of each counter and calculate the number of times at which communication is established between the vehicle-side transmitter and the vehicle-side receiver and the plurality of portable units. If the calculated number of times exceeds a specific value, it clears the plurality of counters. Or, if the value of a counter, in other words, the number of times at which communication is established between the vehicle-side transmitter and the vehicle-side receiver and the portable unit corresponding to this counter, exceeds a specific value, then the counter may also designed to be cleared.

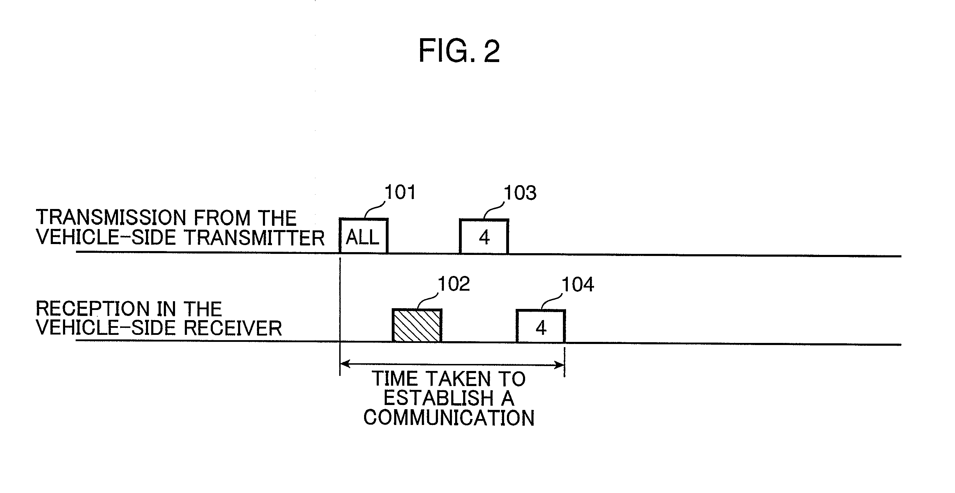

Next, an operation will be described about the vehicle remote-operation apparatus having the above described configuration. Fig. 2 is a diagram, showing a communication sequence in the vehicle remote-operation apparatus shown in Fig. 1 which indicates the processing for transmitting a transmission request signal from the vehicle-side transmitter 22 and the processing for receiving a reply signal from a radio portable unit in the vehicle-side receiver 23.

Herein, as an example, a case will be described in which five portable units 31 to 35, or No.1 to No.5, are registered in the targeted vehicle. Then, the portable unit No.5 established the preceding communication, and several portable units including the No.4 portable unit 34 are located within the range where they can communicate with the vehicle-side transmitter 22 and the vehicle-side receiver 23.

First, if an input is given to the unlocking switch 24, a transmission request signal 101 is transmitted from the vehicle-side transmitter 22. At this point of time, it is unknown how many portable units are within the communicable range with the vehicle-side transmitter 22 and the vehicle-side receiver 23. Hence, this transmission request signal 101 is a transmission request signal for all the portable units 31 to 35.

Herein, within the communicable range with the vehicle-side transmitter 22 and the vehicle-side receiver 23, there are the several portable units. Hence, the reply signals from these several portable units overlap each other to form a reply signal 102. Then, the vehicle-side receiver 23 receives this reply signal 102. This makes it impossible for the control unit 21 to read the contents of the reply signals from the portable units. At this time, the control unit 21 decides that the several portable units are located within the communicable range with the vehicle-side transmitter 22 and the vehicle-side receiver 23. Then, the operation mode shifts to an anti-collision mode.

Table 1 shows the value of each counter 11 to 15 which is provided in the vehicle and corresponds to the individual portable units 31 to 35, respectively. In Table 1, the value of each counter is shown at which the corresponding portable units established communication before this point of time.

**[Table 1]**

| Portable-unit No. | No.1 | No.2 | No.3 | No.4 | No.5 |
|---|---|---|---|---|---|
| Counter Value | 40 | 103 | 79 | 120 | 29 |

Herein, the control unit 21 refers to the values of the counters 11 to 15 shown in Table 1. First, it transmits, from the vehicle-side transmitter 22, a transmission request signal 103 for specifying the No.4 portable unit 34 corresponding to the counter 14 which has the greatest value.

At this time, within the communicable range with the vehicle-side transmitter 22 and the vehicle-side receiver 23, there is the No.4 portable unit 34. Hence, the transmission request signal 103 is received, and a reply signal 104 is transmitted from the No.4 portable unit 34. Then, the vehicle-side receiver 23 receives the reply signal 104, so its contents can be read. Consequently, the communication is established, and at this point, the vehicle-side transmitter 22 and the vehicle-side receiver 23 finish communicating with the portable unit 34.

Thereafter, the in-vehicle unit 25's state is switched from locked to unlocked. Then, among the counters 11 to 15 of Table 1, the counter 14 for the No.4 portable unit which has established this communication gains an increment of one.

In terms of the above described operation, the speed of a response will be compared with that of the prior arts. The time required for transmitting a transmission request signal from the vehicle-side transmitter 22, and the time required for receiving a reply signal from a portable unit in the vehicle-side receiver 23 or the time required for determining that this reply signal cannot be received, are totaled up. This total time is set as one unit of communication time. Hence, if this communication time becomes shorter, the response speed is judged heightened.

According to the prior arts, first, a communication is executed which is involved in a transmission request signal which does not specify any portable unit. Next, a communication is executed which is involved in the transmission request signal for specifying the No.5 portable unit 35 which succeeded in the preceding communication. Sequentially, a communication is executed which is involved in the transmission request signal for specifying the No.4 portable unit 34. This requires three or more communication-time units before a communication is established.

On the other hand, in this embodiment, first, a communication is executed which is involved in a transmission request signal which does not specify any portable unit. Sequentially, a communication is executed which is involved in the transmission request signal for specifying the No.4 portable unit 34 corresponding to the greatest counter value. This requires two communication-time units before a communication is established, thereby making the speed of a response higher than that of the prior arts.

### (Second Embodiment)

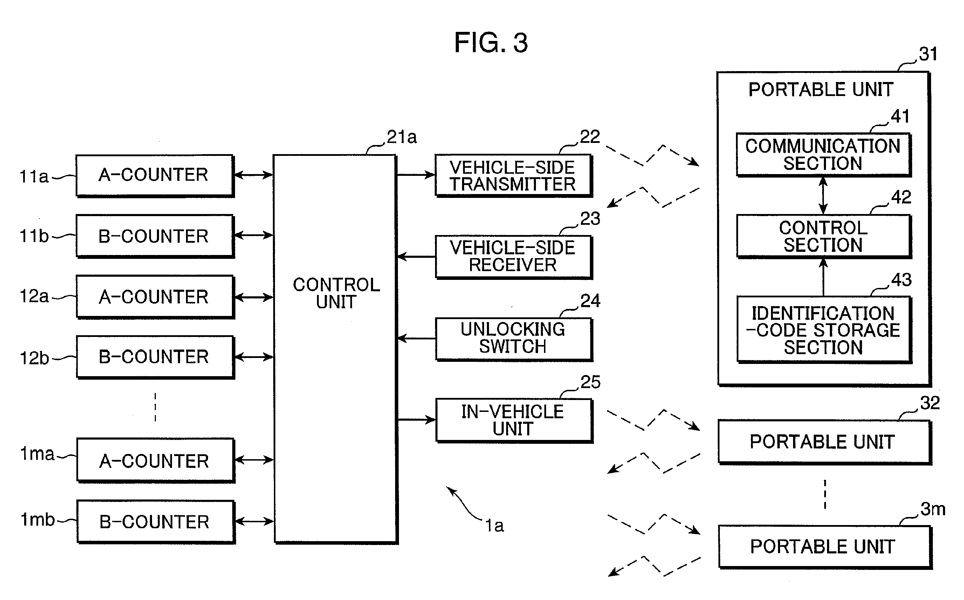

Next, a vehicle remote-operation apparatus according to a second embodiment of the present invention will be described with reference to the attached drawings. Fig. 3 is block diagram, showing the configuration of the vehicle remote-operation apparatus according to the second embodiment of the present invention.

The vehicle remote-operation apparatus shown in Fig. 3 is different from the vehicle remote-operation apparatus shown in Fig. 1, in the following point. For each portable unit, two counters are provided, specifically, A-counters 11a to 1ma and B-counters 11b to 1mb. The vehicle-side communication unit 1 including the control unit 21 is replaced with a vehicle-side communication unit 1a including a control unit 21a which controls the A-counters 11a to 1ma and the B-counters 11b to 1mb. The other respects are the same as those of the vehicle remote-operation apparatus shown in Fig. 1. Hence, the identical component elements are given the same reference characters and numerals, and thus, their detailed description is omitted.

The A-counters 11a to 1ma correspond to each of the plurality of portable units 31 to 3m, and count the number of times at which communication is established between the vehicle-side transmitter 22 and the vehicle-side receiver 23, and the portable units corresponding to themselves. The B-counters 11b to 1mb correspond to each of the plurality of portable units 31 to 3m, and count the number of times at which communication is established between the vehicle-side transmitter 22 and the vehicle-side receiver 23, and the other portable units than the portable units corresponding to themselves.

If the unlocking switch 24 is turned on, in the same way as the first embodiment, the control unit 21a transmits a transmission request signal for all the plurality of portable units 31 to 3m. Hence, the vehicle-side transmitter 22 transmits the transmission request signal for all the plurality of portable units 31 to 3m. If it cannot read the contents of a reply signal, the control unit 21a refers to the values of the A-counters 11a to 1ma and specifies the portable units corresponding to the A-counters 11a to 1ma in order of the greatness of their values. Then, it controls the vehicle-side transmitter 22, so that it transmits the transmission request signal for each portable unit which it has specified, one after another. Hence, the vehicle-side transmitter 22 transmits the transmission request signal for each portable unit, one by one.

At this time, the vehicle-side receiver 23 receives a reply signal from a portable unit. If the control unit 21a reads the contents of the reply signal, it finishes transmitting the transmission request signal. Simultaneously, it increments the value of the A-counter corresponding to the portable unit which has established the communication and increments the value of the B-counter corresponding to the portable unit which has not established any communication. Thereafter, the control unit 21a switches the in-vehicle unit 25 from the state where it is locked to the state where it is unlocked.

In addition, the control unit 21a clears a B-counter whose value has exceeded a specific value among the B-counters 11b to 1mb and the A-counter which corresponds to the portable unit corresponding to this B-counter.

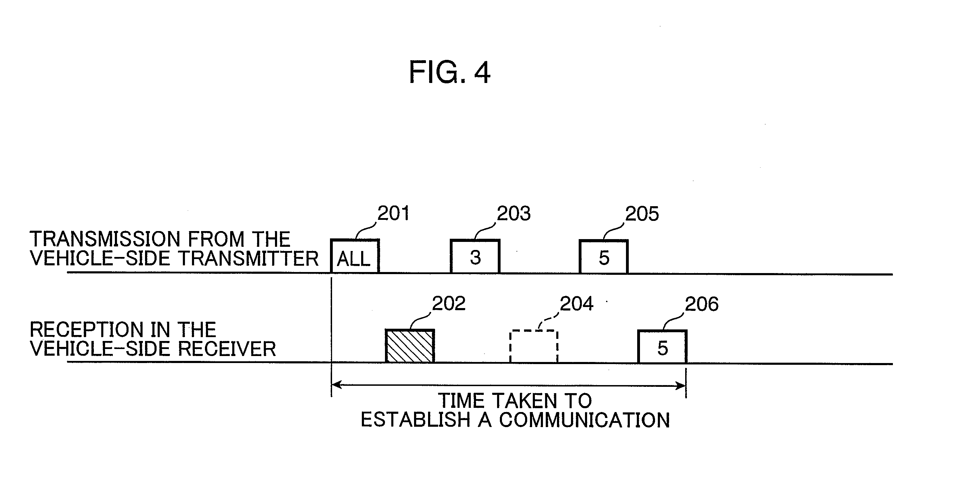

Next, an operation will be described about the vehicle remote-operation apparatus having the above described configuration. Fig. 4 is a diagram, showing a communication sequence in the vehicle remote-operation apparatus shown in Fig. 3 which indicates the processing for transmitting a transmission request signal from the vehicle-side transmitter 22 and the processing for receiving a reply signal from a portable unit in the vehicle-side receiver 23.

Herein, as an example, a case will be described in which five portable units 31 to 35, or No.1 to No.5, are registered in the targeted vehicle. Within the range where they can communicate with the vehicle-side transmitter 22 and the vehicle-side receiver 23, the No.3 portable unit 33 is not located. Several portable units including the No.5 portable unit 35 are located there.

First, if an input is given to the unlocking switch 24, a transmission request signal 201 is transmitted from the vehicle-side transmitter 22. At this point of time, it is unknown how many portable units are within the communicable range with the vehicle-side transmitter 22 and the vehicle-side receiver 23. Hence, this transmission request signal 201 is a transmission request signal for all the portable units 31 to 35.

Herein, within the communicable range with the vehicle-side transmitter 22 and the vehicle-side receiver 23, there are the several portable units. Hence, the reply signals from these several portable units overlap each other to form a reply signal 202. Then, the vehicle-side receiver 23 receives this reply signal 202. This makes it impossible for the control unit 21a to read the contents of the reply signals from the portable units. At this time, it decides that the several portable units are located within the communicable range with the vehicle-side transmitter 22 and the vehicle-side receiver 23. Then, the operation mode shifts to an anti-collision mode.

Table 2 shows the values of the A-counters 11a to 15a and the B-counters 11b to 15b which are provided in the vehicle and correspond to the individual portable units 31 to 35, respectively. The A-counters 11a to 15a and the B-counters 11b to 15b are provided for each portable unit 31 to 35. In each A-counter 11a to 15a, the cumulative number of times is recorded at which the corresponding portable unit establishes communication. On the other hand, in each B-counter 11b to 15b, the cumulative number of times is recorded at which the corresponding portable unit does not establish communication or succeed in communication when the vehicle remote-operation apparatus itself establishes communication. If the value of a B-counter reaches fifty, the corresponding portable unit's A-counter and B-counter are both cleared to zero.

**[Table 2]**

| Portable-unit No. | No.1 | No.2 | No.3 | No.4 | No.5 |
|---|---|---|---|---|---|
| A-Counter Value | 19 | 7 | 120 | 21 | 37 |
| B-Counter Value | 15 | 21 | 49 | 9 | 3 |

Herein, the control unit 21a refers to the values of the A-counters 11a to 15a in Table 2. First, it transmits, from the vehicle-side transmitter 22, a transmission request signal 203 for specifying the No.3 portable unit 33 which has the greatest value.

At this time, within the communicable range with the vehicle-side transmitter 22 and the vehicle-side receiver 23, the No.3 portable unit 33 is not located. Hence, the transmission request signal 203 is not received, and thus, a reply signal 204 is transmitted. This makes it impossible for the vehicle-side receiver 23 to receive any reply signal. Thereby, the decision is made that the No.3 portable unit 33 is not located there.

Next, the control unit 21a refers to the values of the A-counters 11a to 15a in Table 2. First, it transmits, from the vehicle-side transmitter 22, a transmission request signal 205 for specifying the No.5 portable unit 35 which has the second greatest value. Within the communicable range with the vehicle-side transmitter 22 and the vehicle-side receiver 23, there is the No.5 portable unit 35. Hence, the transmission request signal 205 is received, and a reply signal 206 is transmitted from the No.5 portable unit 35. Then, the vehicle-side receiver 23 receives the reply signal 206. The control unit 21a can read its contents, so that the communication is established and completed at this point.

Thereafter, the in-vehicle unit 25's state is switched from locked to unlocked. Then, among the counters of Table 2, the A-counter 15a for the No.5 portable unit 35 which has established this communication gains an increment of one. Simultaneously, the B-counters 11b to 14b corresponding to the other portable units 31 to 34 gain an increment of one in the value, respectively. At this time, the value of the B-counter 13b corresponding to the No.3 portable unit 33 becomes fifty. If the value of a B-counter reaches fifty. Hence, the A-counter 13a and the B-counter 13b which correspond to the No.3 portable unit 33 are both cleared to zero. At this point of time, the values of the counters which are provided in the vehicle and correspond to the individual portable units are shown in Table 3.

**[Table 3]**

| Portable-unit No. | No.1 | No.2 | No.3 | No.4 | No.5 |
|---|---|---|---|---|---|
| A-Counter Value | 19 | 7 | 0 | 21 | 38 |
| B-Counter Value | 16 | 22 | 0 | 10 | 3 |

Next, a case will be described in which an input is given to the unlocking switch 24, with the No.3 portable unit 33 not located and several portable units including the No.5 portable unit 35 located within the communicable range with the vehicle-side transmitter 22 and the vehicle-side receiver 23.

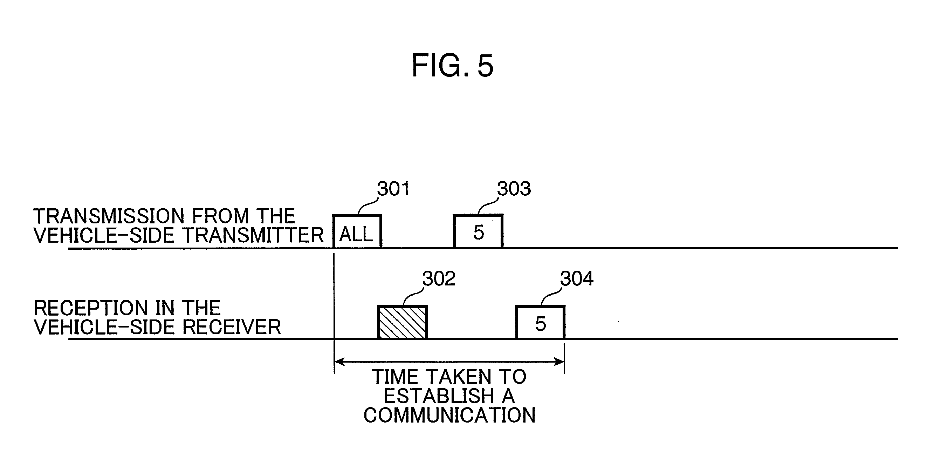

Fig. 5 is a diagram, showing a communication sequence at this time which indicates the processing for transmitting a transmission request signal from the vehicle-side transmitter 22 and the processing for receiving a reply signal from a portable unit in the vehicle-side receiver 23.

If an input is given to the unlocking switch 24, a transmission request signal 301 is transmitted from the vehicle-side transmitter 22. At this point of time, it is unknown how many portable units are within the communicable range with the vehicle-side transmitter 22 and the vehicle-side receiver 23. Hence, this transmission request signal 301 is a transmission request signal for all the portable units 31 to 35.

Herein, within the communicable range with the vehicle-side transmitter 22 and the vehicle-side receiver 23, there are the several portable units. Hence, the reply signals from these several portable units overlap each other to form a reply signal 302. Then, the vehicle-side receiver 23 receives this reply signal 302. This makes it impossible for the control unit 21a to read the contents of the reply signals from the portable units. At this time, the control unit 21a decides that the several portable units are located within the communicable range with the vehicle-side transmitter 22 and the vehicle-side receiver 23. Then, the operation mode shifts to an anti-collision mode.

Herein, the control unit 21a refers to the values of the A-counters 11a to 15a in Table 3. First, it transmits, from the vehicle-side transmitter 22, a transmission request signal 303 for specifying the No.5 portable unit 35 which has the greatest value. At this time, within the communicable range with the vehicle-side transmitter 22 and the vehicle-side receiver 23, there is the No.5 portable unit 35. Hence, the No. 5 portable unit 35 receives the transmission request signal 303 and transmits a reply signal 304. Then, the vehicle-side receiver 23 receives the reply signal 304. The control unit 21a can read its contents, so that the communication is established, and at this point, the vehicle-side transmitter 22 and the vehicle-side receiver 23 finish communicating with the portable unit 35.

Thereafter, the in-vehicle unit 25's state is switched from locked to unlocked. Then, among the counters of Table 3, the A-counter 15a for the No.5 portable unit 35 which has established this communication gains an increment of one. Simultaneously, the B-counters 11b to 14b corresponding to the other portable units 31 to 34 gain an increment of one in the values, respectively.

Incidentally, there is a case in which even if a transmission request signal for specifying one of all the portable units registered in one and the same vehicle is transmitted, a communication is not established. In that case, no communication is judged to have been established, so that such a communication is terminated. Then, theA-counters of Table 3 remain unchanged, and all the B-counters gain an increment of one in the value, respectively.

In terms of the above described operation, the speed of a response of Fig. 4 will be compared with that of Fig. 5. The time required for transmitting a transmission request signal from the vehicle-side transmitter 22, and the time required for receiving a reply signal from a portable unit in the vehicle-side receiver 23 or the time required for determining that this reply signal cannot be received, are totaled up. This total time is set as one unit of communication time. Hence, if this communication time becomes shorter, the response speed is judged heightened.

In the case of Fig. 4, first, a communication is executed which is involved in a transmission request signal which does not specify any portable unit. Next, a communication is executed which is involved in a transmission request signal for specifying the No.3 portable unit 33 which succeeded in the preceding communication corresponding to the greatest A-counter value. Sequentially, a communication is executed which is involved in a transmission request signal for specifying the No.5 portable unit 35 corresponding to the second greatest A-counter value. This requires three communication-time units before a communication is established.

On the other hand, in the case of Fig. 5, as a result of the communication in the case of Fig. 4 immediately before it, the A-counter 13a corresponding to the No.3 portable unit 33 is cleared at zero. Hence, first, a communication is executed which is involved in a transmission request signal which does not specify any portable unit. Sequentially, a communication is executed which is involved in the transmission request signal for specifying the No.5 portable unit 35 corresponding to the greatest A-counter value. This requires two communication-time units before a communication is established. Therefore, compared with the case of Fig. 4, the speed of a response can be heightened, thus making the response speed higher than that of the prior arts.

Incidentally, in this embodiment, a description is given about the communication in an anti-collision mode between a vehicle-side transmitter and a vehicle-side receiver, and each portable unit. However, the present invention can also be applied to a communication system except an anti-collision mode, as long as such a communication system is designed to transmit a transmission request signal for specifying one of several portable units for one and the same vehicle.

Furthermore, when the counter which corresponds to each portable unit gains an increment in the value, such an increment is set at one. However, this increment not necessarily has to be fixed to one. For example, the increment may also be varied according to the conditions for communication.

Moreover, when a B-counter becomes a predetermined value, the corresponding A-counter and the B-counter are cleared. However, the timing in clearing a counter is not limited especially to this example. If there is an A-counter whose value is kept without being increased for a specific period, then only this A-counter, or the A-counter and the B-counter which corresponds to the A-counter may also be cleared. Or, another such may also be executed.

In addition, when a B-counter becomes a predetermined value, the corresponding A-counter is cleared to zero. However, the value after cleared not necessarily has to be fixed at zero. For example, it may also be fixed at any value except zero according to the conditions for communication.

As described so far, the vehicle remote-operation apparatus according to the present invention has an advantage in that the speed of a response can be heightened. Hence, it is useful for a vehicle remote-operation apparatus or the like in which the state of an in-vehicle unit is designed to be changed.

As described above, the vehicle remote-operation apparatus according to the present invention, comprising: a vehicle-side communication unit; and a plurality of radio portable units which are allocated an identification code unique to a vehicle, wherein the vehicle-side communication unit includes: a vehicle-side transmitter which transmits a transmission request signal to each of the plurality of portable units; a vehicle-side receiver which receives a reply signal from each of the plurality of portable units; a plurality of counters which are provided for each of the plurality of portable units, and count a value on a communication state between the vehicle-side transmitter and the vehicle-side receiver and each of the plurality of portable units; and a controller which, with the plurality of portable units located within a communicable range with the vehicle-side transmitter and the vehicle-side receiver, when specifying one portable unit of the plurality of portable units as a communication target and transmitting a transmission request signal from the vehicle-side transmitter, specifies a portable unit in order of the greatness of the values of the plurality of counters, and controls the vehicle-side transmitter so that it transmits a transmission request signal for this portable unit.

In this vehicle remote-operation apparatus, each counter which counts a value on the communication state between the vehicle-side transmitter and the vehicle-side receiver and each portable unit is provided so as to correspond to each registered portable unit. Then, with the plurality of portable units located within the communicable range with the vehicle-side transmitter and the vehicle-side receiver, when one portable unit of the plurality of portable units is specified as a communication target and a transmission request signal is transmitted from the vehicle-side transmitter, a portable unit is specified in order of the greatness of the values of the plurality of counters, and the vehicle-side transmitter is controlled so that a transmission request signal for the specified portable unit is transmitted. Therefore, based on the past communication state between the vehicle-side transmitter and the vehicle-side receiver and each portable unit, the most suitable portable unit can be specified to transmit its transmission request signal. This helps establish a communication in a short time, and thereby, heighten its response speed.

It is preferable that if communication is established between the vehicle-side transmitter and the vehicle-side receiver and one portable unit of the plurality of portable units, the controller increase the value of the counter which corresponds to the portable unit as this communication target.

In this case, each portable unit is specified in order of the greatness of the cumulative number of times at which communication succeeds. Therefore, a communication can be efficiently established, thus heightening its response speed.

Preferably, among the plurality of counters, the controller should clear a counter whose value is not increased for a specific period.

In this case, even if the value of a counter is large, this counter value is cleared when the corresponding portable unit is not used recently. This lowers the order in which it is specified, and thereby, appropriately, makes the speed of a response most suitable.

It is preferable that the controller clear the counters if the number of times at which communication is established between the vehicle-side transmitter and the vehicle-side receiver and the plurality of portable units exceeds a specific value.

In this case, the speed of a response can be improved according to the usage situation of the vehicle remote-operation apparatus.

Preferably, the controller: should transmit a transmission request signal for all the plurality of portable units as communication targets from the vehicle-side transmitter; if a reply signal to this transmission request signal which is transmitted from each portable unit is not decoded, should specify a portable unit in order of the greatness of the values of the plurality of counters; and should control the vehicle-side transmitter so that it transmits a transmission request signal for this portable unit.

In this case, in the case of one portable unit, a communication can be shortly established, so that its response speed becomes higher. On the other hand, in the case of several portable units, each portable unit is specified in order of the greatness of the cumulative number of times at which communication succeeds. Therefore, a communication can be efficiently established, thus heightening its response speed.

It is preferable that the plurality of counters include a plurality of first counters which are provided for each of the plurality of portable units, and count the number of times at which communication is established between the vehicle-side transmitter and the vehicle-side receiver and the portable units corresponding to the first counters themselves, and a plurality of second counters which are provided for each of the plurality of portable units, and count the number of times at which communication is established between the vehicle-side transmitter and the vehicle-side receiver and other portable units than the portable units corresponding to the second counters themselves; and with the plurality of portable units located with in the communicable range with the vehicle-side transmitter and the vehicle-side receiver, when specifying one portable unit of the plurality of portable units as the communication target and transmitting a transmission request signal from the vehicle-side transmitter, the controller specify a portable unit in order of the greatness of the values of the plurality of first counters, and control the vehicle-side transmitter so that it transmits a transmission request signal for this portable unit.

In this case, each portable unit is specified in order of the greatness of the values of the first counters, in other words, in order of the greatness of the cumulative number of times at which communication succeeds. Therefore, a communication can be efficiently established, thus heightening its response speed.

Preferably, the controller should clear a second counter whose value exceeds a specific value among the plurality of second counters and the first counter which corresponds to the portable unit corresponding to this second counter.

In this case, the values of the first and second counters of a portable unit are cleared which has not established any communication beyond a predetermined number of times. Hence, the order in which this portable unit is specified becomes lower. This helps improve the speed of a response according to the usage situation of the vehicle remote-operation apparatus.

It is preferable that the controller: transmit a transmission request signal for all the plurality of portable units as communication targets from the vehicle-side transmitter; if a reply signal to this transmission request signal which is transmitted from each portable unit is not decoded, specify a portable unit in order of the greatness of the values of the plurality of first counters; and control the vehicle-side transmitter so that it transmits a transmission request signal for this portable unit.

In this case, in the case of one portable unit, a communication can be shortly established, so that its response speed becomes higher. On the other hand, in the case of several portable units, each portable unit is specified in order of the greatness of the values of the first counters, in other words, in order of the greatness of the cumulative number of times at which communication succeeds. Therefore, a communication can be efficiently established, thus heightening its response speed.

Preferably, among the plurality of first counters, the controller should clear a first counter whose value is not increased for a specific period and the second counter which corresponds to the portable unit corresponding to this first counter.

In this case, even if the value of a first counter is large, this counter value is cleared when the corresponding portable unit is not used recently. This lowers the order in which it is specified, and thereby, appropriately, makes the speed of a response most suitable.

The vehicle-side communication unit according to the present invention which communicates by radio with a plurality of portable unit allocated an identification code unique to a vehicle, comprising: a vehicle-side transmitter which transmits a transmission request signal to each of the plurality of portable units; a vehicle-side receiver which receives a reply signal from each of the plurality of portable units; a plurality of counters which are provided for each of the plurality of portable units, and count a value on a communication state between the vehicle-side transmitter and the vehicle-side receiver and each of the plurality of portable units; and a controller which, with the plurality of portable units located within a communicable range with the vehicle-side transmitter and the vehicle-side receiver, when specifying one portable unit of the plurality of portable units as a communication target and transmitting a transmission request signal from the vehicle-side transmitter, specifies a portable unit in order of the greatness of the values of the plurality of counters, and controls the vehicle-side transmitter so that it transmits a transmission request signal for this portable unit.

In this vehicle-side communication unit, each counter which counts a value on the communication state between the vehicle-side transmitter and the vehicle-side receiver and each portable unit is provided so as to correspond to each registered portable unit. Then, with the plurality of portable units located within the communicable range with the vehicle-side transmitter and the vehicle-side receiver, when one portable unit of the plurality of portable units is specified as a communication target and a transmission request signal is transmitted from the vehicle-side transmitter, a portable unit is specified in order of the greatness of the values of the plurality of counters, and the vehicle-side transmitter is controlled so that a transmission request signal for the specified portable unit is transmitted. Therefore, based on the past communication state between the vehicle-side transmitter and the vehicle-side receiver and each portable unit, the most suitable portable unit can be specified to transmit its transmission request signal. This helps establish a communication in a short time, and thereby, heighten its response speed.

This application is based on Japanese patent application serial No. 2005-048358, filed in Japan Patent Office on February 24, 2005, the contents of which are hereby incorporated by reference.

Although the present invention has been fully described by way of example with reference to the accompanied drawings, it is to be understood that various changes and modifications will be apparent to those skilled in the art. Therefore, unless otherwise such changes and modifications depart from the scope of the present invention hereinafter defined, they should be construed as being included therein.

A vehicle remote-operation apparatus is provided which is capable of heightening the speed of a response. In this apparatus, with a plurality of portable units for a vehicle located within their communicable range with a vehicle-side transmitter and a vehicle-side receiver, when one of the plurality of portable units is specified as a communication target and a transmission request signal is transmitted from the vehicle-side transmitter, a portable unit is specified in order of the greatness of a counter value corresponding to each portable unit.

## Claims

1. A vehicle remote-operation apparatus, comprising:
a vehicle-side communication unit; and
a plurality of radio portable units which are allocated an identification code unique to a vehicle,
wherein the vehicle-side communication unit includes:
a vehicle-side transmitter which transmits a transmission request signal to each of the plurality of portable units;
a vehicle-side receiver which receives a reply signal from each of the plurality of portable units;
a plurality of counters which are provided for each of the plurality of portable units, and count a value on a communication state between the vehicle-side transmitter and the vehicle-side receiver and each of the plurality of portable units; and
a controller which, with the plurality of portable units located within a communicable range with the vehicle-side transmitter and the vehicle-side receiver, when specifying one portable unit of the plurality of portable units as a communication target and transmitting a transmission request signal from the vehicle-side transmitter, specifies a portable unit in order of the greatness of the values of the plurality of counters, and controls the vehicle-side transmitter so that it transmits a transmission request signal for this portable unit.

2. The vehicle remote-operation apparatus according to claim 1, wherein if communication is established between the vehicle-side transmitter and the vehicle-side receiver and one portable unit of the plurality of portable units, the controller increases the value of the counter which corresponds to the portable unit as this communication target.

3. The vehicle remote-operation apparatus according to claim 2 , wherein among the plurality of counters , the controller clears a counter whose value is not increased for a specific period.

4. The vehicle remote-operation apparatus according to claim 2, wherein the controller clears the counters if the number of times at which communication is established between the vehicle-side transmitter and the vehicle-side receiver and the plurality of portable units exceeds a specific value.

5. The vehicle remote-operation apparatus according to claim 2, wherein the controller: transmits a transmission request signal for all the plurality of portable units as communication targets from the vehicle-side transmitter; if a reply signal to this transmission request signal which is transmitted from each portable unit is not decoded, specifies a portable unit in order of the greatness of the values of the plurality of counters; and controls the vehicle-side transmitter so that it transmits a transmission request signal for this portable unit.

6. The vehicle remote-operation apparatus according to claim 1, wherein:
the plurality of counters include,
a plurality of first counters which are provided for each of the plurality of portable units, and count the number of times at which communication is established between the vehicle-side transmitter and the vehicle-side receiver and the portable units corresponding to the first counters themselves, and
a plurality of second counters which are provided for each of the plurality of portable units, and count the number of times at which communication is established between the vehicle-side transmitter and the vehicle-side receiver and other portable units than the portable units corresponding to the second counters themselves; and
with the plurality of portable units located within the communicable range with the vehicle-side transmitter and the vehicle-side receiver, when specifying one portable unit of the plurality of portable units as the communication target and transmitting a transmission request signal from the vehicle-side transmitter, the controller specifies a portable unit in order of the greatness of the values of the plurality of first counters, and controls the vehicle-side transmitter so that it transmits a transmission request signal for this portable unit.

7. The vehicle remote-operation apparatus according to claim 6, wherein the controller clears a second counter whose value exceeds a specific value among the plurality of second counters and the first counter which corresponds to the portable unit corresponding to this second counter.

8. The vehicle remote-operation apparatus according to claim 6, wherein the controller: transmits a transmission request signal for all the plurality of portable units as communication targets from the vehicle-side transmitter; if a reply signal to this transmission request signal which is transmitted from each portable unit is not decoded, specifies a portable unit in order of the greatness of the values of the plurality of first counters; and controls the vehicle-side transmitter so that it transmits a transmission request signal for this portable unit.

9. The vehicle remote-operation apparatus according to claim 6, wherein among the plurality of first counters, the controller clears a first counter whose value is not increased for a specific period and the second counter which corresponds to the portable unit corresponding to this first counter.

10. A vehicle-side communication unit which communicates by radio with a plurality of portable unit allocated an identification code unique to a vehicle, comprising:
a vehicle-side transmitter which transmits a transmission request signal to each of the plurality of portable units;
a vehicle-side receiver which receives a reply signal from each of the plurality of portable units;
a plurality of counters which are provided for each of the plurality of portable units, and count a value on a communication state between the vehicle-side transmitter and the vehicle-side receiver and each of the plurality of portable units; and
a controller which, with the plurality of portable units located within a communicable range with the vehicle-side transmitter and the vehicle-side receiver, when specifying one portable unit of the plurality of portable units as a communication target and transmitting a transmission request signal from the vehicle-side transmitter, specifies a portable unit in order of the greatness of the values of the plurality of counters, and controls the vehicle-side transmitter so that it transmits a transmission request signal for this portable unit.
